# EUROPEAN PATENT APPLICATION

(11) **EP 2 733 980 A1**
(43) Date of publication of application: **21.05.2014**
(21) Application number: 12192760.2
(22) Date of filing: 15.11.2012
(51) Int. Cl.: H04W 24/08, H04W 24/00

(54) **Method and arrangement for terminal reporting**

(71) Applicant: Telefonaktiebolaget L M Ericsson (publ), 164 83 Stockholm (SE)
(72) Inventor: Gunnarsson, Fredrik, SE-587 50 LINKÖPING (SE); Heikkilä, Gunnar, 954 31 GAMMELSTAD (SE); Lindegren, David, 977 51 Luleå (SE); Veres, András, BUDAPEST H-1113 (HU); Moe, Johan, SE-590 17 MANTORP (SE); Valkó, Andras, SE-165 70 Hässelby (SE)
(74) Representative: Medau, Jörn

(57) **Abstract**

A method for performance reporting in a wireless network, wherein at least one terminal is associated to a report server by means of information in the terminal, including the steps of
- retrieving an operator identity,
- retrieving information identifying an associated report server,
- compiling a fully qualified domain name by combining the operator identity and the information on the associated report server,
- communicating the fully qualified domain name to a domain name server,
- receiving connectivity information to the report server,
- setting up a performance report session to the report server by means of the received connectivity information,

wherein the method further comprises the step of determining geographic location information of the terminal, and wherein the performance report session comprises a report of a geographic location of the terminal.

## Description

### Technical Field

The present invention relates to terminal performance reporting wherein at least one terminal is associated to a report server by means of information in the terminal.

### Background

In a wireless network, such as a LTE network, a WCDMA network or a Wifi network, it is important to ensure good quality for the data traffic in the network. Wireless network operators today have considerable manual effort planning, configuring, optimizing and maintaining their wireless access network to ensure good quality. These efforts can consume a great part of their operational expenditures (OPEX).

One important requirement from the operator's side is a significant reduction of the manual effort in the deployment, configuration and optimization phases for a wireless access system, like UTRAN, E-UTRAN or Wifi. This involves e.g. automation of the tasks typically involved in operating a network like planning, verification through a drive/walk testing and optimization. Drive/walk testing provides a picture of the end user perception in the field and enables the operator to identify locations causing poor performance and their corresponding cause (e.g., incorrect tilt or handover settings). Drive/walk tests are, however, not ideal since only a limited part of the network can be analyzed due to access restrictions. Further, only a snapshot in time of the conditions in the field is captured.

### Summary

It is an object of the present invention to provide an improved method and apparatus for performance reporting. This object is achieved by the independent claims. Advantageous embodiments are described in the dependent claims.

According to an aspect, a method for performance reporting in a wireless network is provided, wherein at least one terminal is associated to a report server by means of information in the terminal. The method includes the steps of retrieving an operator identity and retrieving information identifying an associated report server. Further a fully qualified domain name is compiled by combining the operator identity and the information on the associated report server and the fully qualified domain name communicated to a domain name server. Further the method comprises the steps of receiving connectivity information to the report server and setting up a performance report session to the report server by means of the received connectivity information. The method further comprises the step of determining geographic location information of the terminal, and wherein the performance report session comprises a report of a geographic location of the terminal.

According to another aspect of the invention a terminal in a wireless network is provided which comprises a compiler for compiling a fully qualified domain name by combining a retrieved operator identity and retrieved information on an associated report server and a sending unit, adapted to send the fully qualified domain name to a domain name server. Further the terminal comprises a receiving unit, adapted to receive connectivity information to the report server and a transceiver, adapted to set up a performance report session to the report server by means of the received connectivity information. The terminal further comprises a location unit, adapted to determine geographic location information of the terminal, and wherein the performance report session comprises a report of a geographic location of the terminal.

The inventive method and terminal provide an advantageous method for performance reporting, allowing increased knowledge for the operators on actual performance in relation to the geographic location of a reporting terminal by reducing the costs for testing and optimization of a network. The operator can take the performance report of terminals into account to adjust the setting of their networks.

The present invention also concerns computer programs comprising portions of software codes in order to implement the method as described above when operated by a respective processing unit of a user device and a recipient device. The computer program can be stored on a computer-readable medium. The computer-readable medium can be a permanent or rewritable memory within the user device or the recipient device or located externally. The respective computer program can also be transferred to the user device or recipient device for example via a cable or a wireless link as a sequence of signals.

In the following, detailed embodiments of the present invention shall be described in order to give the skilled person a full and complete understanding. However, these embodiments are illustrative and not intended to be limiting.

### Brief Description of the Figures

- Fig. 1: is an exemplifying wireless network architecture based on 3GPP LTE and Wifi,
- Fig. 2: shows a block diagram of a management system according to one embodiment of the invention,
- Fig.3: shows a flowchart illustrating method steps according to one embodiment of the invention,
- Fig. 4: shows a signaling diagram for method steps according to one embodiment of the invention,
- Fig. 5: shows a block diagram of a terminal architecture.

### Detailed Description

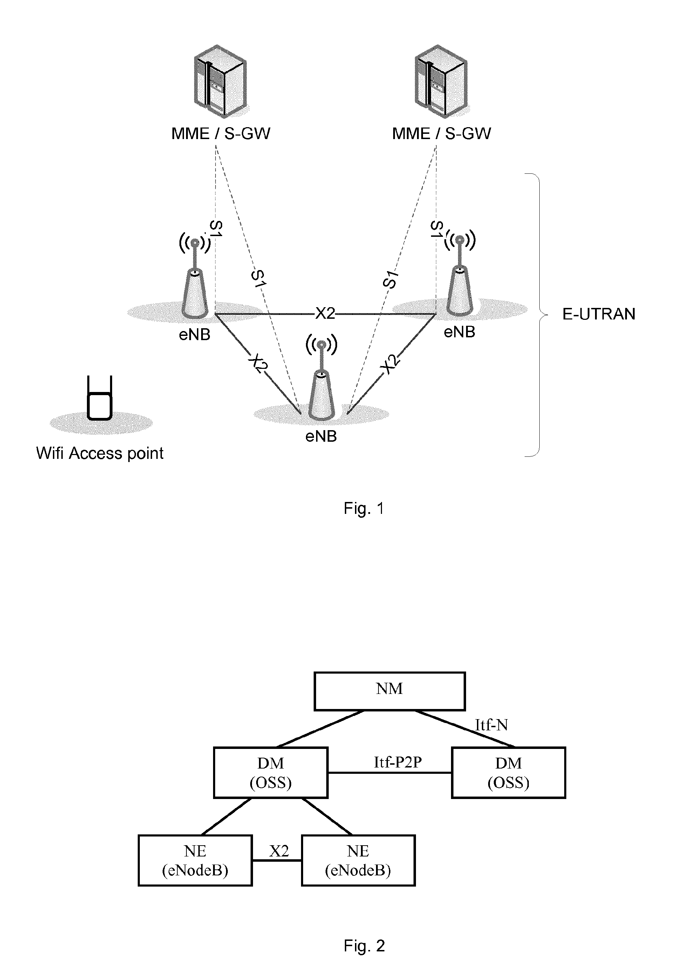

Figure 1 discloses exemplifying wireless network architecture based on 3GPP LTE as well as Wifi wherein mobile terminals or user equipments (UE) receive varying types of service deliveries for which the future performance would benefit from reporting of terminal performance. The Evolved Universal Terrestrial Radio Access Network (E-UTRAN) is made up of Evolved NodeBs (eNodeBs) which are connected to each other via the X2 interface. Both the S1 and the X2 interface can be divided into control plane (dashed line) for control data and user plane (solid lines) for payload data. Figure 1 further discloses as one further embodiment a Wifi access point to which the UE can be additionally connected. This means that the UE can monitor and can be connected to both radio access technologies simultaneously.

The invention can also apply to other types of networks and standards, e.g. GSM with GERAN (GSM EDGE Radio Access Network) or UMTS with UTRAN. The E-UTRAN concept is used merely as an exemplifying standard to illustrate the main concept.

Figure 2 shows a management system according to one embodiment of the invention. The node element (NE) which can be an eNodeB or any other base station are managed by a domain manager (DM), also referred to as the operation and support system (OSS). A DM may further by managed by a network manager (NM). Two NEs are interfaced by an X2 interface, whereas the interface between the two DMs is referred to as an Itf-P2P interface. The network observations end up at a server or database within DM or NM. Other radio access technologies may use different names for different entities, but the basic functionality remains similar. Furthermore, there are some high level functions in the network that also interacts with the UE. One such example is ANDSF (Access network discovery and selection function), which supports the UE to discover and select non-3GPP technologies. It is also possible that such high level functions can configure more general measurements and reporting functions in the UE.

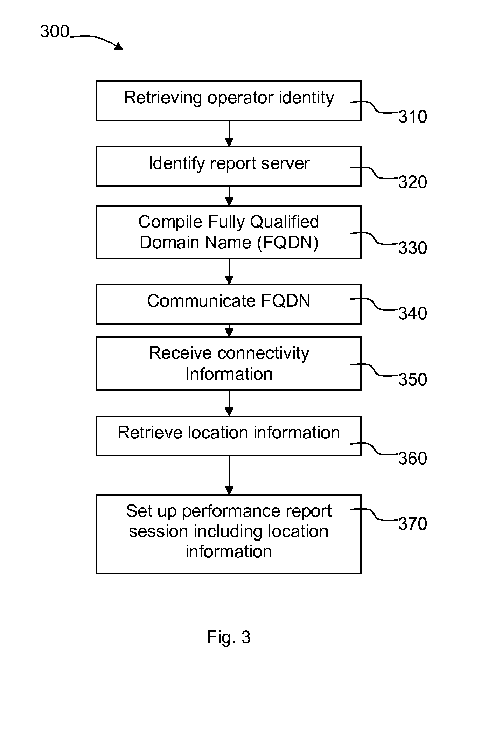

Figure 3 shows a flowchart 300 illustrating an embodiment for performance reporting in a wireless network according to an embodiment of the invention. In a first step 310, an operator identity is retrieved. One example of the operator identity could be a combination of the Mobile Country Code (MCC), which identifies the country of domicile of the mobile subscriber and the Mobile Network Code (MNC) identifying the operator within the country.

In some cases, an operator is managing his cellular network, and is providing service to its subscribers. The subscriber identity module (SIM) in the mobile terminal lists the operator identity of the operator it belongs to. Such operator identity information is part of the International Mobile Subscriber Identity (IMSI). This operator identity can also be broadcasted by the base stations of the operator network. However, it is also possible that the mobile terminal is roaming to a different country or region. In that case, it might obtain service from a different operator with which the mobile terminal operator has agreements. Such information may be listed on the SIM. Another alternative is that the operator markets its services under several brands. This means one infrastructure operator and one or several virtual operators. Each of these operators will have their own operator identity, and the list of valid operator identities are broadcasted in the network. The SIM includes information on the operator (infrastructure or virtual) responsible for the subscription which can be retrieved in step 310.

The International Mobile Subscriber Identity (IMSI) may be used to recover MNC and MCC. For 3GPP systems, the terminal derives the home network domain name from the IMSI according to the following steps. In a first step, the first 5 or 6 digits are taken, depending on whether a 2 or 3 digit-MNC is used (see 3GPP TS 31.102). These taken digits are separated into MCC and MNC. If the MNC consists of only 2 digits a zero shall be added at the beginning. In a next step the MCC and MNC are used to create the domain name:
mnc<MNC>.mcc<MCC>.3gppnetwork.org

An example of a home network domain name is an IMSI in use: 234150999999999. The MCC is 234, the MNC is 15 and the MSIN is 0999999999. These information leads to a home network domain name:
mnc015.mcc234.3gppnetwork.org.

When roaming, the retrieved operator identity is the home operator of the terminal.

Another option for determining operator identity is to use serving cell system information to recover MNC and MCC. The MNC and MCC point at the local operator when roaming or the infrastructure operator when using a virtual operator.

Serving cell system information may also be used to recover a list of MNC and MCC. The selection may then be based on what is also listed on the IMSI. This could mean selecting the MNC and MCC of the virtual operator. The selection may also be based on the first operator identity in the list, or any other selection that leads to the MNC and MCC of the infrastructure operator.

In a subsequent step 320, information relating to an application layer report server is retrieved. The information may be pre-configured in the terminal, introduced in the terminal when setting up a subscription with an operator, downloading by a specific application to the terminal or received when entering a local operator when roaming. The information can e.g. be stored as an application layer report server string ALRS. The application layer report server string ALRS is combined with the operator identity to compile a fully qualified domain name in a step 330, e.g.
alrs.mnc015.mcc234.3gppnetwork.org

According to standard 3GPP TS 23.003 V9.4.0, section 19 and according to the example above, an EPC Home Network Domain can be defined as:
epc.mnc015.mcc234.3gppnetwork.org

In an alternative embodiment of the invention, the network includes more than one application layer report servers. In this case, the step of compiling a fully qualified domain name (FQDN) may also include at least parts of a tracking area identity. The tracking area identity (TAI) consists of a tracking area code TAC, the MNC and the MCC. The TAC is a 16 bit integer. <TAC-high-byte> is the hexadecimal string of the most significant byte in the TAC and <TAC-low-byte> is the hexadecimal string of the least significant byte. If there are less than 2 significant digits in <TAC-high-byte> or <TAC-low-byte>, at least one "0" digit shall be inserted at the left side to fill the 2 digit coding, The TAI FQDN can be compiled as:
tac-lb<TAC-low-byte>.tac-hb<TAC-highbyte>.
tac.epc.mnc<MNC>.mcc<MCC>.3gppnetwork.org
   or
tac-hb<TAC-high-byte>.alrs.mnc<MNC>.mcc<MCC>. 3gppnetwork.org
   or
tac-lb<TAC-low-byte>.alrs.mnc<MNC>.mcc<MCC>. 3gppnetwork.org

Another way to handle multiple application layer report servers is to group them into pools, where each server is identified by a Group-ID (ALRSGI) and a server code (ALRSC) within the group. The FQDN of the application layer report server can thus be constructed as:
alrsc<ALRSC>.alrsg<ALRSGI>.alrs.mnc<MNC>.mcc<MCC>. 3gppnetwork.org

An application layer report server pool FQDN can be constructed as:
alrsgi<ALRSGI>.alrs.mnc<MNC>.mcc<MCC>.3gppnetwork.org

An EPC Home Network domain can be constructed as:
epc.mnc<MNC>.mcc<MCC>.3gppnetwork.org

A Mobility Management Entity (MME) within an operator's network which is acting as the report server is identified using a MME Group ID (MMEGI) and an MME Code (MMEC). The MME node FQDN shall be constructed as:
mmec<MMEC>.mmegi<MMEGI>.mme.epc.mnc<MNC>.mcc<MCC>. 3gppnetwork.org

Regardless of the type compilation of a fully qualified domain name performed in a terminal, the compiled FQDN is sent in step 340 to a domain name server DNS in the network of the operator or any other entity in the network of the operator that may provide connectivity information, to acquire connectivity information for the application layer report server. The DNS or any other entity responds in step 350 with such connectivity information. In an embodiment of the invention, one or several IP addresses are expected to represent the connectivity information. These IP addresses are used by the mobile terminal application to initiate a report session to one or more application layer report server in step 370.

In a next step 360 the method comprises the retrieval of location information. The step 360 can be performed e.g. by the terminal or by any other entity which afterwards might provide the results to the terminal or directly to the report server. The location information can e.g. be geo-located information and can be different in different embodiments. The geo-location information can be a two dimensional location or also including height with respect to a height reference. Such height references include the mean sea level, ground level, etc. The information can also comprise velocity estimates, for example the magnitude of the velocity, the two dimensional velocity or three dimensional velocity. The velocity representation can be based on different coordinate systems, for example separate in the velocity in each of the axes of the coordinate system, or as a magnitude and heading angles with respect to different coordinate axes. Furthermore, the information can also comprise acceleration information, angular velocities etc.

In one embodiment the geo-located information can be information provided by a Global Navigation Satellite System (GNSS) like the Global Positioning System (GPS) or the European Galileo System or any other system. Different GNSSs can be used individually or in combination with other GNSSs. The network may assist the terminal GNSS receiver by providing assistance data (e.g. visible satellite list, clock correction or reference positions) to reduce the terminals GNSS start-up and acquisition times, to increase the sensitivity of the terminal's GNSS or to allow the terminal to consume less handset power than with a stand-alone GNSS. The network-assisted GNSS method rely on signaling between the terminal's GNSS receiver and a continuously operating GNSS reference receiver network which has clear sky visibility of the same GNSS constellation as the assisted terminal. With GNSS the highest accuracy can be achieved which meets the Federal Communications Commission (FCC) requirements.

In another embodiment the geo-located information can be location information as defined in LTE for Enhanced Cell ID (E-CID) which is based on Cell of Origin (COO). With COO the position of the device is estimated using the knowledge of the geographical coordinates of its serving base station, in terms of LTE the eNodeB or in terms of UMTS the NodeB. The knowledge of the serving cell can be obtained by executing a tracking area update or by executing a paging process. The knowledge about the serving cell can be obtained in the terminal from the information broadcasted by the cell. This includes cell identities such as physical cell identities associated to Layer 1 waveforms, information elements of the system information such as globally unique cell identifiers, tracking/routing/location area information, closed subscriber group information (to inform about restricted access to services), access information etc. In case of WiFi this includes the WiFi access point identifier, which typically is the Medium Access Control (MAC) address. It is also possible that the terminal can retrieve broadcasted information also from non-serving cells. The position accuracy is in that case linked to the cell size, as the location server is only aware that the device is served by this base station.

Additional radio resource measurements like the Reference Signal Received Power (RSRP) or the Reference Signal Received Quality (RSRQ) can be used to improve the terminal location estimate. In the RSRP measurement method it is determined for a considered cell the linear average over the power contributions (in [W]) of the resource elements that carry cell-specific reference signals within the considered measurement frequency bandwidth. The RSRQ measurement method is defined as the ratio NxRSRP/(E-UTRA carrier RSSI), where N is the number of RB's of the E-UTRA carrier RSSI measurement bandwidth. The measurements in the numerator and denominator shall be made over the same set of resource blocks. The E-UTRA carrier RSSI (Received Signal Strength Indicator) comprises of the total received wideband power observed by the terminal from all sources, including co-channel serving and non-serving cells, adjacent channel interference, thermal noise etc.. It is further possible for the terminal to determine a rank indication which provides information about the channel rank (number of layers or streams that can be used for DL transmission). Or to determine a Channel-Quality Indicator (CQI) which represents the recommended modulation scheme and coding rate that should be used for DL transmissions.

E-UTRAN is used as the example, but corresponding radio signal strength and quality measurements are available in other radio access technologies as well including UTRAN, GERAN, WLAN, Bluetooth, ANT+, RFID etc.

In another embodiment the geo-located information is retrieved by the Observed Time Difference Of Arrival (OTDOA) method which utilizes the differences of time measurements of downlink radio signals from at least three base stations, like eNodeBs or NodeBs, along with the knowledge of the geographical coordinates of the measured base stations and their relative downlink timing for calculating the terminal position. In order to increase the hearability of the base stations, a Positioning Reference Signal (PRS) with a frequency reuse of six in combination with low-interference subframes (LIS) is introduced.

In another embodiment the determination of geo-located information also comprises the use of other downlink radio signals, such as WLAN, Bluetooth, ANT+ or RFID. Furthermore, it can be supported by information from the report server concerning the location of the access points. Alternatively, the time difference measurements can be sent to the report server, where the location estimation is finalized.

In another embodiment, the geo-located information can be determined by the difference between the reception time of a downlink radio frame and the transmission time of an uplink radio frame in the terminal. This corresponds to the round-trip time of the signaling with the serving base station provided that the uplink alignment is ideal (no-ideal alignment will contribute to the estimation error).

In another embodiment the geo-located information is a building indicator. A building indicator can be a cell identity of a cell covering a building which serves the terminal. Further a building indicator can be a cell group identity such as a tracking area, a location area or a sub-network mask representing a set of cells. A building indicator may further be an indicator provided by the application layer of an indoor navigation application which can be associated to a building. Examples of such an indicator are a visual indicator that the terminal registers via the camera, a radio frequency ID tag that the terminal identifies via an embedded dedicated reader, a piece of information broadcasted or transmitted by a short range transmitter such as Bluetooth, ANT+, etc.

In another embodiment the geo-located information can be determined in the terminal with support from one or more of embedded sensors of the terminal. One example could be an accelerometer, a gyroscope or a camera. The sensor signals can be supported with map data.

In another embodiment the geo-located information can be retrieved by using a hybrid method out of the location determination methods mentioned before.

In another embodiment the scope of the report can be configured from the report server.

Step 360 as disclosed in Figure 3 may also be located at a different position in the flowchart. It may be possible that the location information is retrieved before the first step 310 is performed. It may also be possible that location information is retrieved in parallel to the method 300. The information about location of the terminal must be available before it is sent to the application layer report server in or after step 370.

In step 370 a performance report session is initiated between the terminal and the application layer report server by means of the received connectivity information of step 350. The location information can be sent to the application layer report server in any performance report which is sent to the application layer report server after the session has been initiated and if the location information is available. The location information or geo-located information can be aggregated as an information element in a message or can be a separate message, sent to the application layer report server. The information can have been acquired prior to initiating the report session.

The position information can be reported together with an estimated error or uncertainty of the position and the velocity of the terminal. The uncertainty of the position information or location information depends on the used method, the position of the terminal within the coverage area of the communication network and the activity of the terminal.

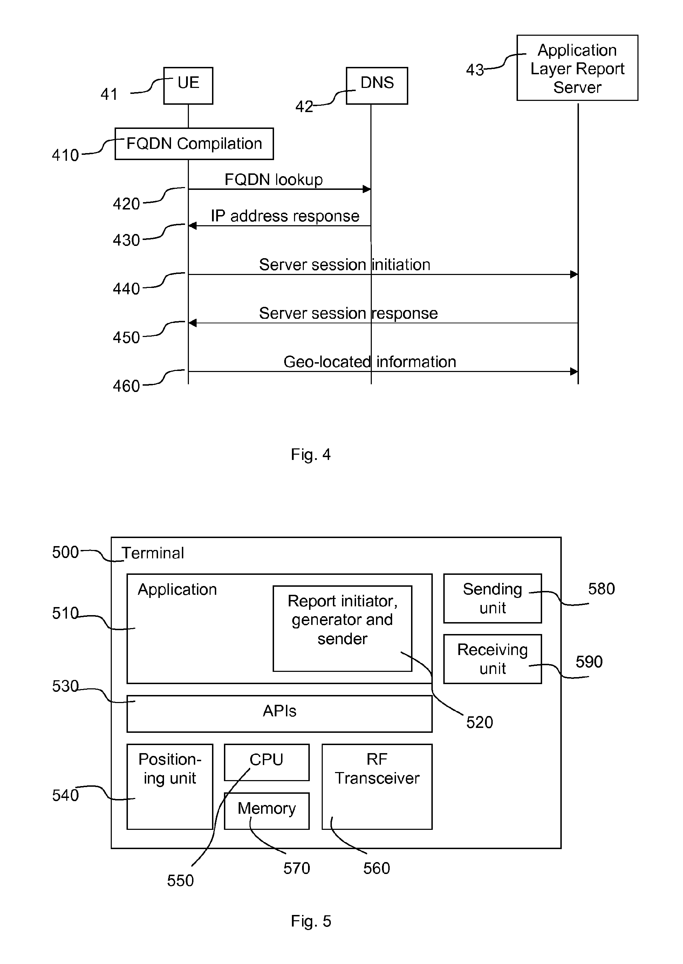

Figure 4 discloses a signaling diagram for an embodiment of the invention. A fully qualified domain name (FQDN) is compiled 410 in the terminal UE 41. A FQDN signal 420 is initiated to a domain name server DNS 42 for identifying proper connectivity information based on the information present in the fully qualified domain name. The identification of connectivity information in the DNS is performed in a conventional way. The DNS responds including the connectivity information, e.g., an IP address, in an IP address response 430 to the terminal 41. The terminal 41 receives the connectivity information and sends a server session initiation signal 440 to the application layer report server 43. The signaling is addressed to an application layer report server 43, which may be part of service provider core network with a logical interface to a terminal access network. The application layer report server 43 sends a server session response 450 to the terminal UE 41 to inform the terminal UE 41 that a session is established. The response may also comprise information about reporting formats, and scopes. The response may exclude such information if the terminal has indicated its reporting format and/or scope information, and it is considered up to date. Following the initiation, geo-located information is transmitted to the application layer report server 43 if this information is available. The geo-located information can additionally comprise measurement reports. The measurement report can be based on the serving cell of the terminal UE 41 but also on neighboring cells on the same carrier or on different carriers wherein the Radio Access Technology (RAT) can be the same or different. The scope of the measurements which can be reported in the geo-located information message 460 can be downlink radio signal strength and/or quality or uplink transmission power, either in absolute terms or in relation to a maximum transmission power value. Further the scope can be downlink and/or uplink bit rates which can be the same for all packets or divided into different service classes where each service can be identified by information in the packets or packet headers. One further example for the scope of the measurements can be a packet failure rate or retransmission statistics. The scope can also be channel state information as described above. Further it is possible that the measurement covers the activity status of the links. It is also possible that the measurement scope is similar to what is defined for Minimization of Drive Tests (MDT) and can be updated when MDT specification changes. The measurement report can be encapsulated in the geo-located information message or it can be sent in another message after the server session is initiated. The measurement report can reflect either instantaneous measurements, a series of measurements or statistics concerning e.g. a time window. It is possible to report the average value, a percentile, a distribution or a histogram. Further it is also possible to report measurements gathered prior to initiating the report session.

It is also possible to monitor Wireless Local Area Network (WLAN) or WiFi access points by the terminal because WLAN access points also have capability to provide mobile broadband data services. Such nodes are associated to a medium access control (MAC) address, a SSID, etc. Moreover, the WLAN access points can communicate over one or more frequency bands B, and within each band using one or more channels C. The terminal or the access point can monitor the signal strength, bit rate, IP packet types and numbers, control packets, noise levels, packet retransmissions, packet errors, etc. of the WLAN connection. The terminal can monitor the serving access point as well as neighboring access points. Therefore the terminal must be equipped with a WLAN transceiver.

Figure 5 illustrates a block diagram of an exemplifying terminal or UE 500 consisting of hardware and software components. An application 510 with reporting facilitators or compiler 520 interacts with the terminal hardware and software components through an application programming interfaces (APIs) 530 with the terminal RF transceiver 570, positioning unit 540 and the processing unit CPU 550.

The reporting facilitators 520 in said application 510 include an arrangement or compiler 520 for determining a fully qualified domain name based on information in a subscriber identity module and a terminal association stored in a memory 570 of the terminal 500. The terminal 500 further comprises a sending unit 580, adapted to send the fully qualified domain name to a domain name server and a receiving unit 590, adapted to receive connectivity information to the report server. This connectivity information can e.g. be an IP address of an application layer report server. The sending unit 580 and the receiving unit 590 can be separate entities or can be part of the RF transceiver 560. The RF transceiver 560 of the terminal 500 is adapted to set up a performance report session to the report server by means of the received connectivity information. Further the terminal 500 comprises a positioning unit 540 which is adapted to determine geographic location information of the terminal 500.

Via the APIs 530 it is possible for the report generator or compiler 520 to compile reports for example with a scope similar to that of MDT, possibly with its enhancements, but also with the possibility to include other radio access technologies such as WiFi. The scope of the reporting can be obtained from the application layer report server via the receiving unit 590, or the transceiver unit 560. The position information which can be geo-located information, such as geographic coordinates, can be provided by the positioning unit 540 to the report initiator and generator 520 to include a geographic location in the performance report session. Such information is sent to the application layer report server via the disclosed IP address. Moreover, it is possible to define an API between a general application and an application layer report server to convey application layer performance indicators to an application layer report server at the operator network.

In one embodiment, this API 530 follows the MDT specification and format. In another embodiment, the MDT specification and format is followed, but for other radio access technologies as well, such as WiFi.

## Claims

1. A method for performance reporting in a wireless network, wherein at least one terminal is associated to a report server by means of information in the terminal, including the steps of
- retrieving an operator identity,
- retrieving information identifying an associated report server,
- compiling a fully qualified domain name by combining the operator identity and the information on the associated report server,
- communicating the fully qualified domain name to a domain name server,
- receiving connectivity information to the report server,
- setting up a performance report session to the report server by means of the received connectivity information,
wherein the method further comprises the step of determining geographic location information of the terminal, and wherein the performance report session comprises a report of a geographic location of the terminal.

2. Method according to claim 1, wherein the connectivity information is an Internet Protocol, IP, address.

3. Method according to any of the preceding claims, wherein the steps are carried out in the terminal.

4. Method according to any of the preceding claims, wherein the report server is part of a service provider core network with an interface to a terminal access network.

5. Method according to any of the preceding claims, wherein the operator identity is recovered from subscriber identity information in the terminal.

6. Method according to any of the preceding claims, wherein the performance report session comprises a report of a radio signal strength between the terminal and the wireless network.

7. Method according to any of the preceding claims, wherein the performance report session comprises a report of a downlink and/or uplink bitrate.

8. Method according to any of the preceding claims, wherein the performance report session comprises a report about a packet failure rate or retransmission statistics.

9. Method according to any of the preceding claims, wherein the performance report session comprises a report of the radio signal strength and/or radio signal quality and/or connection quality and/or parameters of a wireless local area network, WLAN, connection.

10. Method according to any of the preceding claims, wherein the geographic location information is determined from a Global Navigation Satellite System, GNSS.

11. Method according to any of the preceding claims, wherein the geographic location information is determined in the terminal with support from one or more of embedded sensors of the terminal.

12. Method according to any of the preceding claims, wherein the report scope is configured from the report server.

13. Method according to any of the preceding claims, wherein the subscription information comprises an International Mobile Subscriber Identity, IMSI, containing the operator identity in terms of Mobile Country Code, MCC, which identifies uniquely the country of domicile of the mobile subscriber and the Mobile Network Code, MNC, which identifies the operator within the country.

14. A terminal in a wireless network, comprising
- a compiler for compiling a fully qualified domain name by combining a retrieved operator identity and retrieved information on an associated report server,
- a sending unit, adapted to send the fully qualified domain name to a domain name server,
- a receiving unit, adapted to receive connectivity information to the report server,
- a transceiver, adapted to set up a performance report session to the report server by means of the received connectivity information,
wherein the terminal further comprises a location unit, adapted to determine geographic location information of the terminal, and wherein the performance report session comprises a report of a geographic location of the terminal.

15. Terminal according to claim 14, wherein the terminal is adapted to perform all the steps of the method of at least one of the claims 1 to 13.
